# EUROPEAN PATENT APPLICATION

(11) **EP 2 843 032 A1**
(43) Date of publication of application: **04.03.2015**
(21) Application number: 13182551.5
(22) Date of filing: 02.09.2013
(51) Int. Cl.: C10L 5/34, C10L 9/08, C10B 57/10, C10B 57/16, C10B 57/14, C10L 5/36

(54) **Method for increasing calorific value of low-grade coals**

(71) Applicant: Sato, Kunimichi, Nakano-ku, Tokyo (JP)
(72) Inventor: Sato, Kunimichi, Nakano-ku, Tokyo (JP)
(74) Representative: Thurston, Joanna

(57) **Abstract**

To provide less expensive and non-polluting coals of which calorific values are increased by improving composition of coals having high moisture content and low fire power, such as peat and lignite, to thereby increase combustion calorie. Materials of coals are heated in a predetermined temperature range in an oxygen-free atmosphere while injecting inactive gas, and elements except for carbon in the atmosphere and in the coals are individually separated by thermal decomposition in the order from an element having a lower decomposition temperature at a temperature of 450 degrees C or lower so as to obtain upgraded coals. Since the carbon composing the upgraded coals has strong activity, the upgraded coals have quality equivalent or greater than that of the coal of ordinary quality and demonstrate combustion efficiency that has been significantly improved from those of the materials before upgrading.

## Description

### BACKGROUND OF THE INVENTION

### Field of the Invention

The present invention relates to a method and a device for improving composition of coals. More particularly, the present invention relates to a method for improving composition of coals having high moisture content, such as peat, to thereby increase calorific values of the coals.

### Description of Prior Art

Coal, peat and the like (hereafter, referred to as "coals") are fuel which, along with oil, occupies an important position as an energy source necessary for industry and social life today. Currently, China, Australia, Indonesia and other countries are known as coal producers and Japan imports coals from these countries and uses them as fuel in, for example, thermal power plants and steel plants. In order for these coals to serve as fuel, it is necessary that the coals provide a calorific value of about 4,500 kcal/kg or greater (which is equivalent to that of, for example, coal of ordinary or greater quality) when burned. Since coals providing calorific values smaller than about 4,500 kcal/kg (for example, peat and lignite) have lower fire power than that of coal of ordinary quality (that is, the gross calorific value of such coals is at most 2, 000 kcal/kg), prices thereof are set low. The coals with the gross calorific value of 2,000 kcal/kg or lower are considered not to be useful as fuel and are thus wasted.

In order to improve quality of low-grade coals as combustion resources, methods or techniques for drying coal wastes, extracting moisture content and increasing combustion calorie have been proposed and implemented. An exemplary related art technique for improving quality of coals as combustion resources is described in Japanese Patent Laid-Open No. 2001-139957.

In the past, methods for drying coal wastes, extracting moisture content and increasing combustion calorie have been proposed and implemented. However, the degree of increase in the combustion calorie is at most about 50%. Therefore, even if, for example, coals providing a calorific value of 2,000 kcal/kg are dried and moisture content is extracted by a related art method, a calorific value will be increased only up to about 3,000 kcal/kg.

The present invention is made in view of the aforementioned problem and an object thereof is to provide a method for increasing calorific values of low-grade coals by improving composition of coals, especially those having high moisture content and low fire power, such as peat and lignite, to thereby increase combustion calorie.

### SUMMARY OF THE INVENTION

In order to overcome the problem described above, the present invention is a method for increasing calorific value of low-grade coals, which includes:
putting materials of coals in an airtight chamber in an inert atmosphere; as a first stage, keeping a temperature of the coals at from 100 to 150 degrees C so that moisture content is vaporized sufficiently and the vaporized moisture content (vapor) is exhausted from the airtight chamber; at the same time, injecting the same amount of inert gas as that of the exhausted vapor in the airtight chamber to always keep the inside of the airtight chamber airtight and in an inert atmosphere; moreover,
successively heating the coals having been in a fully dried state up to temperatures from 350 to 450 degrees C to thermally decompose elements contained in the materials, individually separating expected elements except for carbon in the atmosphere and in the organic material from bonding with carbon by thermal decomposition in the order from an element having a lower decomposition temperature at a temperature of 450 degrees C or lower, and exhausting the elements each time of separation to outside of the atmosphere while keeping in an inert atmosphere; and at the same time, injecting the same amount of inert gas as that of the exhausted separated elements in the airtight chamber to always keep the inside of the airtight chamber airtight and in an inert atmosphere to thereby increase the calorific value of the low-grade coals.

According to the present invention, materials of coals are heated under predetermined conditions to improve composition of the materials so as to obtain the upgraded coals with high combustion efficiency. The upgraded coals are of the same quality as that of the coal of ordinary quality and demonstrate combustion efficiency that has been significantly improved from those of the materials before upgrading. Accordingly, high energy resources may be provided from less expensive materials.

### BRIEF DESCRIPTION OF THE DRAWINGS

Fig. 1 is a cross-sectional view schematically illustrating a device for preparing upgraded coals according to an embodiment of the present invention.
Fig. 2 is a table showing a result of a combustion experiment regarding the upgraded coals according to the present invention.

### DESCRIPTION OF THE PREFERRED EMBODIMENTS

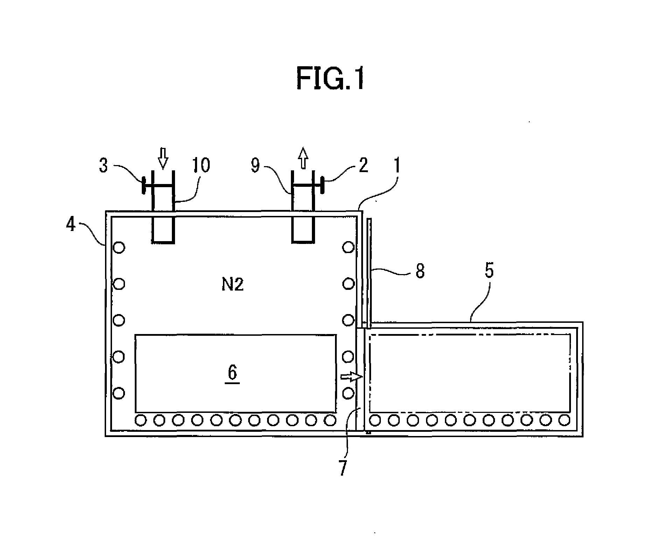

Next, an embodiment of the present invention will be described with reference to the accompanying drawings. Fig. 1 illustrates an exemplary device for implementing a method for increasing calorific values of low-grade coals (hereafter, referred to as a "device for upgrading coals") in the present invention. The device for upgrading coals includes an airtight chamber 1 in which no air can get, a pipeline 10 provided with a nitrogen injection shut-off valve 3 and a pipeline 9 provided with a pyrolysis gas exhaust shut-off valve 2. A heater 4 is mounted inside the device to rise the temperature up to a predetermined temperature. Moreover, the device for upgrading coals according to the present embodiment includes a cartridge 5 which has the same atmosphere (i.e., a nitrogen atmosphere) as that of the airtight chamber 1 for taking out carbon, and a container 6 in which coals used as materials are put. Examples of the coals intended in the present invention are peat and lignite, which are not fully carbonized, mostly contain moisture content, and have low fire power as fuel. The cartridge 5 is detachable from the airtight chamber 1. In Fig. 1, the reference numeral 7 denotes a shutter provided at a gateway of the coals and the container 6 in the airtight chamber 1 and, when it is closed, the airtight chamber 1 is kept airtight or in a nitrogen atmosphere. The reference numeral 8 denotes a cover or a shut-off door provided in the cartridge 5 and, when it is closed, the cartridge 5 is kept airtight or in a nitrogen atmosphere.

Next, in order to prepare upgraded coals according to the present invention, the coals are first put in the container 6 and loaded in (i.e., carried in) the airtight chamber 1 in which the heater 4 is mounted. Then, nitrogen gas as inert gas is injected from the nitrogen injection shut-off valve 3 and, at the same time, air inside is exhausted from the pyrolysis gas exhaust shut-off valve 2 to create a nitrogen atmosphere inside the airtight chamber 1 and inside the cartridge. Then, inside the airtight chamber 1 and inside the cartridge 5 are heated by the heater 4. As a first stage, since the coals contain moisture content, the coals are kept at a temperature of from 100 to 150 degrees C (150 degrees C is preferable) so that the moisture content is vaporized sufficiently and is exhausted from the airtight chamber 1. At the same time, it is desirable that the same amount of nitrogen be injected from the nitrogen injection shut-off valve 3 to always keep the inside of the airtight chamber 1 in a state where the coals are not oxidized, i.e., keep airtight and in a nitrogen atmosphere. Moreover, the coals having been in a fully dried state are successively heated by using the heater 4 up to temperatures from 350 to 450 degrees C to thermally decompose the elements contained in the coals. It is necessary that all elements of the coals generated until the temperature reaches 450 degrees C are exhausted to the outside of the airtight chamber 1 and nitrogen is injected each time to keep an inert atmosphere. Then, the elements in the coals which are bonded with carbon separate from the remaining carbon and upgraded coals according to the present invention which do not vaporized at 450 degrees C remain. Carbon which composes the upgraded coals has strong activity. Herein, as characteristics of carbon, the excitation energy for allotropic bonding in which carbon in an organic state is crystallized and becomes an inorganic state, that is, the excitation energy for graphitization requires a high temperature of 450 degrees C or higher. Therefore, it is necessary for the temperature of the upgraded coals of the present invention to be 450 degrees C or lower at which no graphite is formed. Then, the heater 4 is stopped and cold nitrogen gas is injected from the nitrogen injection shut-off valve 3. At the same time, hot nitrogen gas inside is exhausted from the pyrolysis gas exhaust shut-off valve 2 to cool down the inside of the airtight chamber 1 and inside of the cartridge 5 to about 50 to 100 degrees C. After that, the upgraded coals are moved from the airtight chamber 1 to the cartridge 5 with the container 6, the cover 8 of the cartridge 5 is closed, and the cartridge 5 is separated from the airtight chamber 1 while keeping a nitrogen atmosphere inside of this cartridge 5. The shutter 7 of the airtight chamber 1 is also closed to prepare for the next operation. After putting the materials of the coals in the airtight chamber 1, the nitrogen gas is injected at multiple stages until the upgraded coals are completed. However, nitrogen gas may be injected continuously from the first stage at which the materials of the coals are put in the airtight chamber 1 until the final stage at which the upgraded coals are completed.

After each process is completed, the cartridge 5 is required to be sealed up to store the upgraded coals in a nitrogen atmosphere which does not oxidize the upgraded coals so that the coals can fully demonstrate their capability as fuel. Since the upgraded coals stored in the cartridge 5 are not exposed to air, the upgraded coals do not combine with oxygen or other substances. The upgraded coals which do not combine with oxygen or other substances are ground into particles or ultra-fine particles, if necessary. Grinding of the upgraded coals may be carried out in any preparation processes after obtaining the upgraded coals. For example, the upgraded coals maybe ground into ultra-fine particles in an inert atmosphere at a temperature of 450 degrees C or lower in the airtight chamber 1 in a process before the upgraded coals are put in the cartridge 5 in a sealed state. Alternatively, after cooling to about from 50 to 100 degrees C, the upgraded coals may be ground into ultra-fine particles in an inert atmosphere in the airtight chamber 1. Moreover, after the aforementioned cooling, the upgraded coals maybe stored in the cartridge 5 in a sealed state and carried to a grinding site, and a grinding process may be applied by using a grinding machine, such as a jet mill.

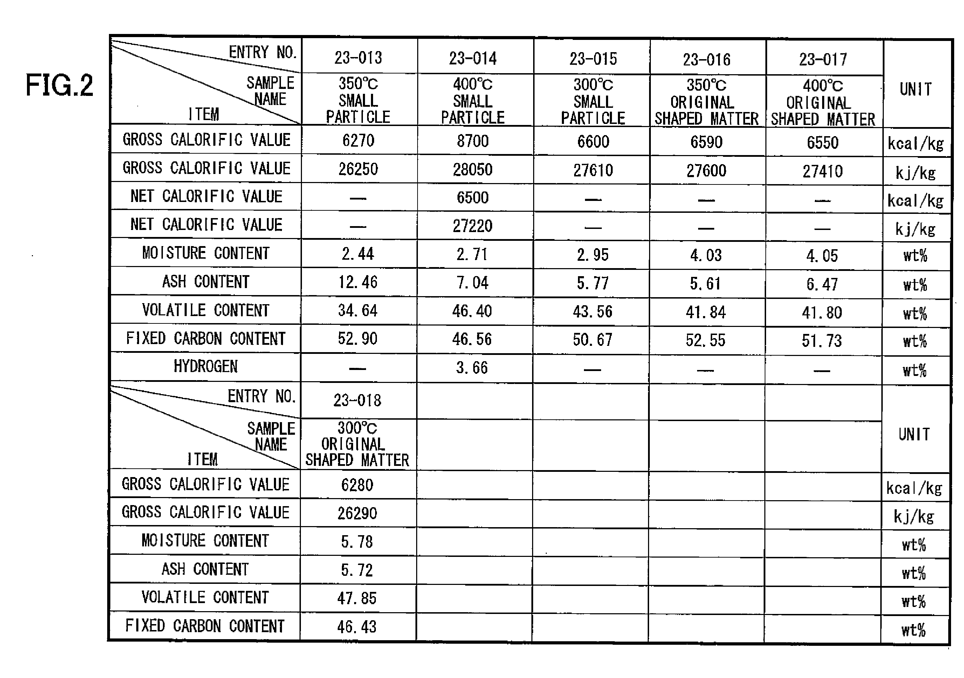

The carbon composing the aforementioned upgraded coals does not combine with oxygen or other substances, and thus has strong activity and high reactivity. Therefore, it has been shown in an experiment that the upgraded coals provide a calorific value of 5,000 to 7, 000 kcal/kg when burned. Fig. 2 is a table showing a result of a combustion experiment regarding the aforementioned upgraded coals. In the table of Fig. 2, the sample name "small particle" indicates that the coals have been granular at the time of materials and the sample name "original shaped matter" indicates that the coals have been bulky at the time of materials. Moreover, 300 degrees C, 350 degrees C and 400 degrees C as temperature indication indicate achieving temperatures in heating operations of "the coals are successively heated up to temperatures from 350 to 450 degrees C" in the aforementioned description. Regarding the result of combustion, the table shows that the gross calorific value is in a range of 5,000 to 7,000 kcal/kg regardless of the property at the time of materials and regardless of the achieving temperature. As described in the aforementioned "Description of Prior Art," these coals have had gross calorific value of at most 2,000 kcal/kg at the time of materials: it is therefore obvious that the coals have changed into significantly fine fuel after the upgrading.

As another property, the aforementioned upgraded coals create highly negative ion water (pH: 11 or greater) having high reactivity when mixed in water. As even another property, when the electrical conductivity of the upgraded coals according to the present invention is examined, a current value is 0. It indicates that the upgraded coals are complete insulators.

The materials of the coals are heated under predetermined conditions to improve composition of the materials so as to obtain the upgraded coals. Since the carbon composing the upgraded coals has strong activity, the upgraded coals burn providing a calorific value equivalent to or greater than that of the coal of ordinary quality and demonstrate combustion efficiency that has been significantly improved from those of the materials before upgrading. Accordingly, the upgraded coals are useful in securing energy resources.

Although the invention has been described with reference to the preferred embodiment illustrated in the drawings, it is understood by those skilled in the art that various changes and modifications can be made without departing from the spirit and scope of the invention. The invention includes those changes and modifications.

## Claims

1. A method for increasing calorific value of low-grade coals, comprising:
putting materials of coals in an airtight chamber in an inert atmosphere;
as a first stage, keeping a temperature of the materials of the coals at from 100 to 150 degrees C so that moisture content is vaporized sufficiently and the vaporized moisture content (vapor) is exhausted from the airtight chamber;
at the same time, injecting the same amount of inert gas as that of the exhausted vapor in the airtight chamber to always keep the inside of the airtight chamber airtight and in an inert atmosphere;
moreover, successively heating the coals having been in a fully dried state up to temperatures from 350 to 450 degrees C to thermally decompose elements contained in the materials,
individually separating expected elements except for carbon in the atmosphere and in the organic material from bonding with carbon by thermal decomposition in the order from an element having a lower decomposition temperature at a temperature of 450 degrees C or lower, and exhausting the elements each time of separation to outside of the atmosphere while keeping in an inert atmosphere;
at the same time, injecting the same amount of inert gas as that of the exhausted separated elements in the airtight chamber to always keep the inside of the airtight
chamber airtight and in an inert atmosphere; and
moreover, sealing the obtained upgraded coals in a bulk state in a cartridge while keeping in an inert atmosphere.

2. The method for increasing calorific value of low-grade coals according to claim 1, wherein the coals are ground into ultra-fine grains in an inert atmosphere at a temperature of 450 degrees C or lower in a process before the upgraded coals are put in the cartridge in a sealed state.

3. The method for increasing calorific value of low-grade coals according to claim 1, wherein the materials are one of peat and lignite.
